Europäisches Patentamt

European Patent Office

Office européen des brevets

(11) Veröffentlichungsnummer : **0 165 460**
**B1**

(12) **EUROPÄISCHE PATENTSCHRIFT**

(45) Veröffentlichungstag der Patentschrift :
13.12.89

(51) Int. Cl.⁴ : **G 01 S   3/48**, G 01 S   3/04

(21) Anmeldenummer : 85105902.2

(22) Anmeldetag : 14.05.85

(54) Interferometerpeilanordnung.

(30) Priorität : 24.05.84 DE 3419341

(43) Veröffentlichungstag der Anmeldung :
27.12.85 Patentblatt 85/52

(45) Bekanntmachung des Hinweises auf die Patenterteilung : 13.12.89 Patentblatt 89/50

(84) Benannte Vertragsstaaten :
CH DE FR GB IT LI

(56) Entgegenhaltungen :
DE--B-- 1 246 053
DE--B-- 1 246 054
FR--A--   902 039
FR--A-- 1 524 050
FR--A-- 2 476 854
US--A-- 4 387 376

(73) Patentinhaber : Licentia Patent-Verwaltungs-GmbH
Theodor-Stern-Kai 1
D-6000 Frankfurt/Main 70 (DE)

(72) Erfinder : Bodemann, Gerhard, Dipl.-Ing.
Eichengrund 101
D-7900 Ulm (DE)
Erfinder : Fliege, Hans-Joachim, Dipl.-Ing.
Erlenweg 7
D-7906 Blaustein (DE)
Erfinder : Saur, Hermann, Dipl.-Ing. (FH)
Hölderlinweg 3
D-7900 Ulm (DE)

(74) Vertreter : Schulze, Harald Rudolf, Dipl.-Ing. et al
Licentia Patent-Verwaltungs-GmbH Theodor-Stern-
Kai 1
D-6000 Frankfurt/Main 70 (DE)

**Beschreibung**

Die Erfindung betrifft eine Interferometerpeilanordnung der im Oberbegriff des Patentanspruchs 1 angegebenen Art.

Peilanordnungen, die nach dem Interferometerprinzip arbeiten, sind vielfach beschrieben, beispielsweise in Proc. IEE, 1961, S. 495-499 und US-A-4 387 376. Im Prinzip wird dabei immer ein Paar räumlich getrennter Antennen an einen Zweikanalempfänger angeschlossen und aus den Ausgangsspannungen der beiden Empfängerkanäle wird die Einfallsrichtung einer Welle relativ zur Verbindungslinie der beiden Antennen bestimmt. Da diese eine Messung noch kein eindeutiges Ergebnis liefert, wird ein anderes Antennenpaar mit anders ausgerichteter Verbindungslinie an den Zweikanalempfänger angeschlossen und wieder die relative Einfallsrichtung bestimmt. Aus dem Vergleich der beiden Ergebnisse läßt sich eindeutig die Einfallsrichtung nach Azimut und Elevation ermitteln.

Dabei werden Kurzzeitsignale unter Umständen nur bei einer Messung erfaßt, so daß keine eindeutige Ermittlung der Einfallsrichtung möglich ist. Der Erfindung liegt daher die Aufgabe zugrunde, mit einfachen Mitteln die Peilzeit einer Interferometerpeilanordnung zu verkürzen.

Die erfindungsgemäße Lösung dieser Aufgabe ist im Kennzeichen des Patentanspruchs 1 beschrieben. Die Unteransprüche beinhalten vorteilhafte Ausgestaltungen und Weiterbildungen der Erfindung.

Dreikanalige Peilempfänger, wie sie gemäß der Erfindung eingesetzt werden sollen, sind für andere Peilverfahren wie beispielsweise bei einer Adcock-Anordnung seit langem gebräuchlich und daher in technisch ausgereifter Form und für alle in Frage kommenden Frequenzbereiche verfügbar. Eine besonders vorteilhafte Weiterbildung der Erfindung sieht daher auch vor, die Interferometerpeilanordnung in Verbindung mit einer Adcock-Antennenanlage zu betreiben unter Verwendung nur eines Dreikanalempfängers, der wahlweise an die Interferometerantennenanlage oder an die Adcock-Antennenanlage anschaltbar ist. Die für Adcock- und Interferometer-Peilverfahren unterschiedlichen Auswerteeinrichtungen werden dabei selbstverständlich mit umgeschaltet.

Durch die Aufstellung der drei Antennen in der Art, daß sie nicht auf einer Geraden liegen, also die Eckpunkte eines Dreiecks, vorzugsweise eines rechtwinkligen Dreiecks bilden, ergeben sich immer mindestens zwei Antennenpaare (die eine Antenne gemeinsam haben) mit unterschiedlich ausgerichteten Basislinien, die vorteilhafterweise senkrecht aufeinander stehen. Aus dem paarweisen Vergleich von Antennenspannungen ergibt sich für jedes Antennenpaar ein Einfallswinkel bezüglich der jeweiligen Basislinie, der aber noch nicht eindeutig die Einfallsrichtung angibt. Die Eindeutigkeit wird durch Kombination der beiden für die beiden Antennenpaare getrennt gewonnenen relativen Einfallswinkel in an sich bekannter Weise erzielt. Die beiden Vergleiche zweier Antennenspannungen können parallel in zwei separaten Vergleichseinrichtungen oder nach Zwischenspeicherung von Spannungsabtastwerten nacheinander in einer Vergleichseinrichtung vorgenommen werden. Wesentlich ist dann, daß die Abtastwerte durch Verwendung des dreikanaligen Peilempfängers gleichzeitig entnommen werden können und jede Abtastung zu einem Peilergebnis führt.

Die Erfindung ist nachfolgend anhand der Abbildungen noch an einem bevorzugten Ausführungsbeispiel veranschaulicht. Dabei zeigt

Fig. 1 den Aufbau der Antennenanordnung einer erfindungsgemäßen Interferometerpeilanordnung

Fig. 2 eine Schalteinrichtung zum Anschluß von Antennen an einen dreikanaligen Peilempfänger.

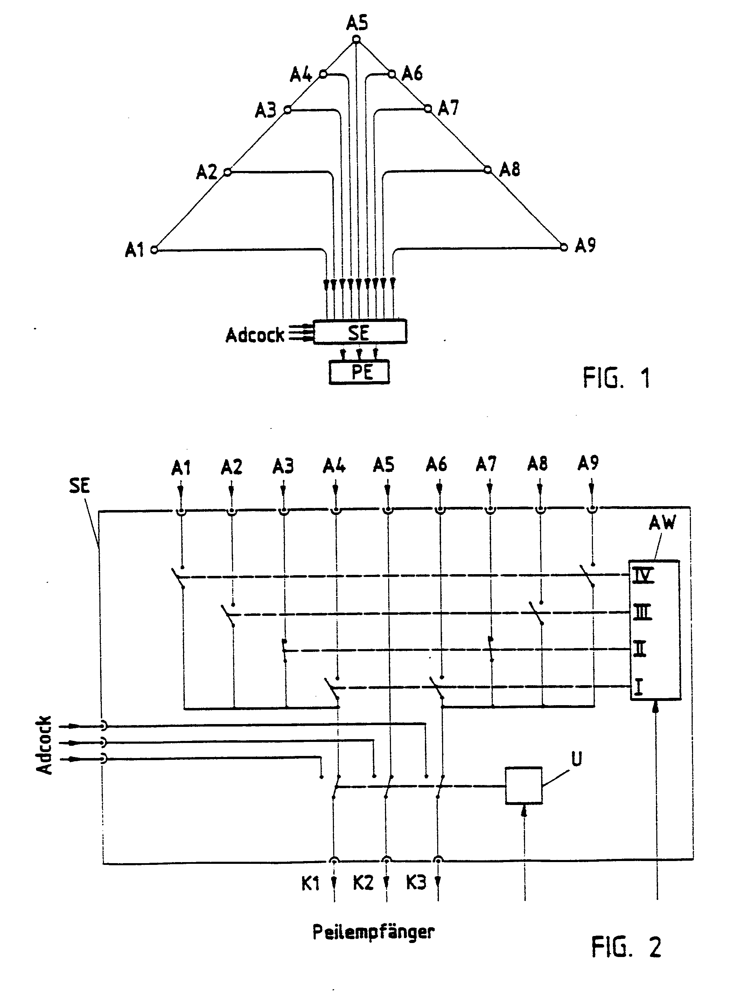

Bei der Antennenanordnung der Fig. 1 sind die Interferometerpeilantennen A1 bis A9 auf zwei gleich aufgebauten, sich rechtwinklig schneidenden Antennenzeilen angeordnet, wobei sich die Antenne A5 als Referenzantenne für beide Antennenzeilen im Schnittpunkt der Zeilen befindet. Die Antennen sind über gleichlange Zuleitungskabel mit der Schalteinrichtung SE verbunden. Mittels dieser Schalteinrichtung werden zur Durchführung einer Interferometerpeilung die Referenzantenne A5 und je eine Antenne aus jeder Antennenzeile an den dreikanaligen Peilempfänger PE angeschlossen. Weiter ermöglicht die Schalteinrichtung SE die Umschaltung des Peilempfängers auf die zwei Peilspannungen und die Hilfsspannung einer Adcock-Peilantennenanordnung, erforderlichenfalls unter Zwischenschaltung eines Koordinatentransformators.

Die Schalteinrichtung kann durch Betätigung des Umschalters U die drei Empfangskanäle K1, K2, K3 des Peilempfängers wahlweise mit der Adcock-Antennenanordnung oder der Interferometer-Antennananordnung verbinden.

Bei der Interferometerpeilung ist die Antenne A5 als beiden Antennenzeilen gemeinsame Referenzantenne dauernd an den Empfangskanal K2 des Peilempfängers angeschlossen, während über durch den Antennenwahlschalter AW betätigte Schaltmittel wahlweise eine der Antennen A1, A2, A3, A4 an den Empfangskanal K1 und eine der Antennen A6, A7, A8, A9 an den Empfangskanal K3 anschließbar ist. Die Schaltmittel werden paarweise gemeinsam betätigt, wobei das Schließen des Schaltmittelpaars I die Antennen A4 und A6, des Schaltmittelpaares II die Antennen A3 und A7 (dargestellter Fall) usw. an die Empfangskanäle K1 bzw. K2 anschaltet. Zur Auswertung der Antennenspannungen werden die Kanalspannungen der Empfangskanäle K1 und K3 getrennt jeweils miteinander verglichen, so daß im dargestellten Schaltzustand das Antennenpaar A3, A5 einen ersten Einfallswinkel relativ zur Verbindungslinie der beiden Antennen und das Antennenpaar A7, A5 einen zweiten Einfallswinkel liefert. Aus der Kombination dieser beiden Einfallswinkel wird die Einfallsrichtung ermittelt. Durch die paarweise Schaltmittelbetätigung über den Antennenwahlschalter AW haben die auf diese Weise aus den gleichzeitig angeschlossenen Antennen gebildeten Antennenpaare A4, A5 und A6, A5 bzw. A3, A5 und A7, A5 bzw. A2, A5 und A8, A5 und A9, A5 immer untereinander die gleiche Basislänge. Die Umschaltung ermöglicht den an sich bekannten Übergang von einer Kleinbasis zu einer Großbasis mit höherer Meßgenauigkeit.

Eine vorteilhafte Weiterbildung sieht die Verwendung mehrerer dreikanaliger Empfänger vor, wobei die Spannung der Referenzantenne über eine Verteilerschaltung an den jeweiligen Referenzkanal jedes Peilempfängers geführt wird und die beiden anderen Kanäle jedes Empfängers jeweils mit zwei im gleichen Abstand von der Referenzantenne auf den beiden Antennzeilen angeordneten Antennen verbunden sind. Die Probenentnahme erfolgt in allen Empfängern gleichzeitig oder zumindest quasigleichzeitig in dem Sinn, daß die Zeitdifferenz zwischen Probennahme in verschiedenen Empfängern klein ist gegenüber dem Kehrwert der Empfangsbandbreite. Mit einer solchen Anordnung ist eine genaue Peilung auch sehr kurzzeitiger Signale möglich. Die Verwendung dreikanaliger Empfänger bietet gegenüber einem Vielkanalempfänger den Vorteil, daß jeweils nur drei Kanäle auf genauen Gleichlauf eingestellt werden müssen. Zudem kann jeder der Peiler in Verbindung mit einem anderen Peilantennensystem, das drei Spannungen abgibt, betrieben werden.

## Patentansprüche

1. Interferometerpeilanordnung mit mehreren Empfangsantennen auf zwei sich kreuzenden Antennenzeilen, wobei eine der Antennen als Referenzantenne im Kreuzungspunkt der Zeilen und auf jeder Zeile mindestens zwei weitere Antennen mit unterschiedlichen Abständen zur Referenzantenne angeordnet sind, mit einem Peilempfänger, mit Einrichtungen zur Bestimmung der jeweiligen Phasendifferenz bei verschiedenen Antennenpaaren und mit Einrichtungen zur Ermittlung der Einfallsrichtung einer Welle aus dem Vergleich der bestimmten Phasendifferenzen zweier Antennenpaare mit unterschiedlich ausgerichteten Verbindungslinien, dadurch gekennzeichnet, daß der Empfänger ein dreikanaliger Empfänger ist, daß zur gleichen Zeit drei nicht auf einer Geraden liegende Antennen an den Peilempfänger angeschlossen sind in der Weise, daß die Referenzantenne dauernd mit einem Kanal des Peilempfängers verbunden ist und ein Antennenwahlschalter jeweils eine Antenne aus jeder der beiden Zeilen mit je einem der beiden weiteren Kanäle verbindet, daß die Antennenspannung der Referenzantenne mit jeder der beiden anderen Antennenspannungen verglichen und die Einfallsrichtung aus den beiden Vergleichsergebnissen ermittelt wird.

2. Anordnung nach Anspruch 1, dadurch gekennzeichnet, daß die beiden Antennenzeilen senkrecht zueinander ausgerichtet sind.

3. Anordnung nach Anspruch 1 oder 2 bis 3, dadurch gekennzeichnet, daß beide Antennenzeilen gleich aufgebaut sind.

4. Anordnung nach einem der Ansprüche 1 bis 3, dadurch gekennzeichnet, daß der Peilempfänger über einen Umschalter auf eine Adcockpeilantennenanordnung umschaltbar ist.

## Claims

1. Interferometric direction-finding arrangement with several receiving aerials on two mutually crossing aerial lines, wherein one of the aerials is arranged as reference aerial in the intersection of the lines and at least two further aerials are arranged on each line at different spacings from the reference aerial, with a direction-finding receiver, with equipments for the determination of the respective phase difference at different aerial pairs and with equipments for ascertaining the direction of incidence of a wave from the comparison of the determined phase differences between two aerial pairs with differently oriented connecting lines, characterised thereby, that the receiver is a three-channel receiver, that three aerials not lying on a straight line are connected to the direction-finding receiver at the same time in such a manner that the reference aerial is permanently connected with one channel of the direction-finding receiver and an aerial selector switch connects one aerial each from both the lines with a respective one of both the further channels, that the aerial voltage of the reference aerial is compared with each of both the other aerial voltages and the direction of incidence is ascertained from both the comparison results.

2. Arrangement according to claim 1, characterised thereby, that both the aerial lines are oriented one perpendicularly to the other.

3. Arrangement according to claim 1 or 2, characterised thereby, that both the aerial lines are constructed alike.

4. Arrangement according to one of the claims 1 to 3, characterised thereby, that the direction-finding receiver is switchable by way of a changeover switch onto an Addock direction-finding aerial arrangement.

## Revendications

1. Dispositif de relèvement interférométrique comportant plusieurs antennes réceptrices disposées sur deux lignes d'antennes qui se croisent, l'une des antennes étant disposée comme antenne de référence au point de croisement des lignes et au moins deux autres antennes, situées à des distances différentes de l'antenne de référence, étant disposées sur chaque ligne, comportant aussi un récepteur de relèvement, des mécanismes pour déterminer la différence de phase respective pour les différentes paires d'antennes et des mécanismes pour établir la direction d'incidence d'une onde à partir de la comparaison des différences de phase déterminées de deux paires d'antennes à lignes de jonction orientées différemment, caractérisé en ce que le récepteur est un récepteur à trois canaux ; en ce que trois antennes, nom situées sur une ligne droite, sont simultanément reliées au récepteur de relèvement de façon que l'antenne de référence soit reliée en permanence avec un canal de récepteur de relèvement et qu'un sélecteur d'antenne relie respectivement une antenne de chacune des deux lignes à, chaque fois, l'un des deux autres canaux ; en ce que l'on compare la tension de l'antenne de référence à chacune des deux autres tensions d'antenne et en ce que l'on établit la direction d'incidence à partir des deux résultats de comparaison.

2. Dispositif selon la revendication 1, caractérisé en ce que les deux lignes d'antenne sont orientées perpendiculairement l'une à l'autre.

3. Dispositif la revendication 1 ou 2, caractérisé en ce que les deux lignes de l'antenne sont de même structure.

4. Dispositif selon l'une des revendications 1 à 3, caractérisé en ce que le récepteur de relèvement peut, au moyen d'un commutateur, être commuté sur un dispositif d'antenne de relèvement de Adcock.

FIG. 1

FIG. 2

Peilempfänger